Europäisches Patentamt

European Patent Office

Office européen des brevets

(19)

(11) **EP 1 035 938 B1**

(12) # EUROPÄISCHE PATENTSCHRIFT

(45) Veröffentlichungstag und Bekanntmachung des Hinweises auf die Patenterteilung:
**13.02.2002 Patentblatt 2002/07**

(21) Anmeldenummer: **98958238.2**

(22) Anmeldetag: **02.11.1998**

(51) Int Cl.⁷: **B23D 63/14**, B23D 63/00, B24B 47/22, B24B 3/08

(86) Internationale Anmeldenummer:
**PCT/EP98/06916**

(87) Internationale Veröffentlichungsnummer:
**WO 99/22898 (14.05.1999 Gazette 1999/19)**

(54) **MASCHINE ZUM BEARBEITEN VON WERKSTÜCKEN MIT SCHNEIDZÄHNEN, INSBES. VON SÄGEBLÄTTERN**

MACHINE FOR MACHINING WORK PIECES WITH CUTTING TEETH, ESPECIALLY SAW BLADES

MACHINE POUR USINER DES PIECES MUNIES DE DENTS COUPANTES, NOTAMMENT DES LAMES DE SCIE

(84) Benannte Vertragsstaaten:
**DE FR GB IT**

(30) Priorität: **04.11.1997 DE 19748673**

(43) Veröffentlichungstag der Anmeldung:
**20.09.2000 Patentblatt 2000/38**

(73) Patentinhaber: **VOLLMER WERKE MASCHINENFABRIK GMBH**
**D-88400 Biberach (DE)**

(72) Erfinder:
• **BAILER, Norbert**
**D-88433 Schemmerhofen-Altheim (DE)**

• **LENARD, Peter**
**D-88400 Biberach (DE)**

(74) Vertreter: **Goetz, Rupert, Dipl.-Ing.**
**Wuesthoff & Wuesthoff Patent- und Rechtsanwälte Schweigerstrasse 2**
**81541 München (DE)**

(56) Entgegenhaltungen:
WO-A-92/19406          DE-A- 2 751 408
US-A- 4 963 710

**Beschreibung**

Die Erfindung betrifft eine Maschine nach dem Oberbegriff des Anspruchs 1.

Bei einer bekannten Maschine dieser Gattung (DE 27 51 408 A1) ist die Bezugsachse durch ein am Maschinengestell angeordnetes Kipplager definiert, an dem ein radial von ihm wegragender Träger gelagert ist. An diesem ist eine Hubführung ausgebildet, an der ein Hubschlitten radial zur Bezugsachse verschiebbar geführt ist. Am Hubschlitten ist durch eine Schwenklagerung eine Schwenkachse definiert, die sich parallel zur Hubführung erstreckt und die Bezugsachse rechtwinklig schneidet. In der Schwenklagerung ist eine Welle gelagert, an der ein Spindelkopf befestigt ist. Im Spindelkopf ist eine Pinole längs einer die Schwenkachse rechtwinklig schneidenden Schleifspindelachse mittels eines Zustellantriebes verschiebbar geführt. Die Pinole, die somit einem Zustellschlitten entspricht, enthält eine drehantreibbare Schleifspindel, die eine tellerförmige Schleifscheibe zum Schärfen der Verzahnung eines Kreissägeblattes trägt. Zum Schärfen von geraden Zahnbrustflächen (Spanflächen) oder von geraden Zahnrückenflächen (Freiflächen) wird die Pinole mittels des Zustellantriebes immer so eingestellt, daß die aktive Stirnfläche der Schleifscheibe in einer Ebene liegt, welche die Bezugsachse enthält. Zum Schleifen von schrägen Flächen wird der Spindelkopf je nach Richtung der Schräge in einer oder der anderen Richtung um die Schwenkachse geschwenkt. Zu diesem Zweck ist am vom Spindelkopf abgewandten Ende der den Spindelkopf tragenden Welle eine Traverse befestigt, auf der in gleichen Abständen von der Schwenkachse und in bezug auf diese diametral gegenüber zwei Rollen freidrehbar gelagert sind. Diese beiden Rollen sind zwischen je einer Kolbenzylindereinheit und einem einstellbaren Anschlag derart angeordnet, daß die Traverse, und somit die sie tragende Welle mit dem Spindelkopf, in einem durch die Anschläge begrenzten Schwenkbereich hin- und herschwenkbar ist. Die dabei zu bewegenden trägen Massen sind allerdings erheblich, da die Pinole samt ihrem Zustellantrieb an den Schwenkungen teilnimmt. Dadurch ist die bei hin- und hergehenden Schwenkbewegungen erreichbare Schwenkfrequenz begrenzt.

Der Erfindung liegt die Aufgabe zugrunde, eine Maschine zum Bearbeiten von Werkstücken mit Schneidzähnen, insbes. von Sägeblättern, derart weiterzubilden, daß sie in abwechselnden Richtungen schräge Zahnbrust- oder Zahnrückflächen oder Abfasungen schneller zu bearbeiten vermag als die beschriebene bekannte Maschine.

Die Aufgabe ist erfindungsgemäß durch eine Maschine zum Bearbeiten von Werkstücken mit Schneidzähnen mit den Merkmalen des Anspruchs 1 gelöst. Vorteilhafte Weiterbildungen sind Gegenstand der Unteransprüche.

Erfindungsgemäß wird das bei Sägenschärfmaschinen bisher wesentliche Konstruktionsprinzip aufgegeben, wonach die aktive Fläche des Werkzeugs so angeordnet sein mußte, daß sie von der Schwenkachse des Werkzeugkopfes berührt wird und diese die Bezugsachse der Maschine schneidet. Mit der Erfindung wird erreicht, daß der Zustellschlitten ebensowenig wie der Hubschlitten an Schwenkungen des Werkzeugkopfes um die Schwenkachse teilnimmt. Infolgedessen ist von den Schwenkungen nur eine verhältnismäßig kleine träge Masse betroffen, und deshalb können die Schwenkungen mit hoher Geschwindigkeit stattfinden.

Die Schwenkachse kann von der aktiven Fläche des Werkzeugs, insbes. von der aktiven Stirnfläche eines teller- oder topfförmigen Werkzeugs, einen Abstand in der Größenordnung von bis zu etwa einem Zehntel des Werkzeugdurchmessers haben. Der Einfluß dieses Abstandes auf die Bearbeitungsgeometrie läßt sich mit den erfindungsgemäßen Maßnahmen derart kompensieren, daß man an bearbeiteten Schneidzähnen nicht erkennt, ob sie mit der erfindungsgemäßen oder einer bekannten Maschine bearbeitet worden sind. Unter Bearbeiten ist in erster Linie das Abtragen von Material durch Schleifen, in geeigneten Fällen aber auch durch Elektroerosion zu verstehen. Dementsprechend kommt als Werkzeug, das an der Werkzeugspindel zu befestigen ist, sowohl eine Schleifscheibe wie eine Erodierscheibe in Frage.

Ein Ausführungsbeispiel der Erfindung wird im folgenden anhand schematischer Zeichnungen mit weiteren Einzelheiten beschrieben. Es zeigen:

Fig. 1      eine Maschine zum Schärfen von Kreissägeblättern in Vorderansicht,

Fig. 2      die Ansicht in Richtung der Pfeile II in Fig. 1,

Fig. 3      die Draufsicht in Richtung des Pfeils III in Fig. 2,

Fig. 4      den Schnitt IV-IV in Fig. 2,

Fig. 5      einen vergrößerten Ausschnitt aus Fig. 4 und

Fig. 6      eine Abwandlung von Fig. 4.

Als Beispiel für ein auf der abgebildeten Maschine zu bearbeitendes Werkstück 10 ist ein Kreissägeblatt mit hartmetallbestückten Schneidzähnen 12 dargestellt, von denen jeder an seiner Zahnbrust 14 und an seinem Zahnrücken 16 zu schleifen ist, während seine Zahnspitze 18 eine vorbestimmte Stellung auf einer ortsfesten Bezugsachse A der Maschine einnimmt.

Die abgebildete Maschine hat ein Maschinengestell 20, an dem eine waagerechte Zustellführung 22 ortsfest angeordnet ist. Daran ist ein Zustellschlitten 24 von einem numerisch gesteuerten elektrischen Motor 26, insbes. Servo- oder Schrittmotor, über eine Zustellspindel 28 verschiebbar geführt. Die jeweilige Stellung des Zustellschlittens 24 wird von einer Wegmeßeinrichtung 30 überwacht.

Am Zustellschlitten 24 ist eine senkrechte Hubführung 32 angeordnet, an der ein Hubschlitten 34 von einem numerisch gesteuerten elektrischen Motor 36, insbes. Servo- oder Schrittmotor, über eine Hubspindel 38, überwacht von einer Wegmeßeinrichtung 40, auf- und abbewegbar ist. In den Hubschlitten 34 ist eine Schwenklagerung 42 eingebaut, die eine zur Hubführung 32 parallele, im dargestellten Beispiel also senkrechte, Schwenkachse B definiert. Die Schwenkachse B ist die Achse einer in der Schwenklagerung 42 gelagerten Schwenkwelle 44, an deren unterem Ende ein Werkzeugkopf 46 befestigt ist.

Im Werkzeugkopf 46 ist, durch eine Isolierhülse 48 elektrisch isoliert, ein Lagergehäuse 50 befestigt, das eine die Schwenkachse B senkrecht schneidende, im dargestellten Beispiel waagerechte Spindelachse C definiert. Diese ist die Achse einer im Lagergehäuse 50 gelagerten Werkzeugspindel 52, die über einen Riementrieb 54 mit einem Motor 56 verbunden ist. Der Motor 56 ist ein Elektromotor, der über einen Frequenzwandler gespeist wird, sodaß die Werkzeugspindel 52 mit in weiten Grenzen einstellbaren Drehzahlen antreibbar ist.

Der Hubschlitten 34 hat einen oberen Ausleger 58, auf dem ein Schwenkantrieb 60 zum Schwenken des Werkzeugkopfes 46 angeordnet ist. Zum Schwenkantrieb 60 gehören ein numerisch gesteuerter Motor 62, insbes. Servo- oder Schrittmotor, und ein Untersetzungsgetriebe 64 mit einem ersten Zahnriemen 66, der die Welle des Motors 62 mit einem am Ausleger 58 gelagerten Zwischenrad 68 verbindet, ferner mit einem Zwischenritzel 70, das mit dem Zwischenrad 68 fest verbunden und durch einen zweiten Zahnriemen 72 mit einem auf der Schwenkwelle 44 befestigten Zahnrad 74 verbunden ist.

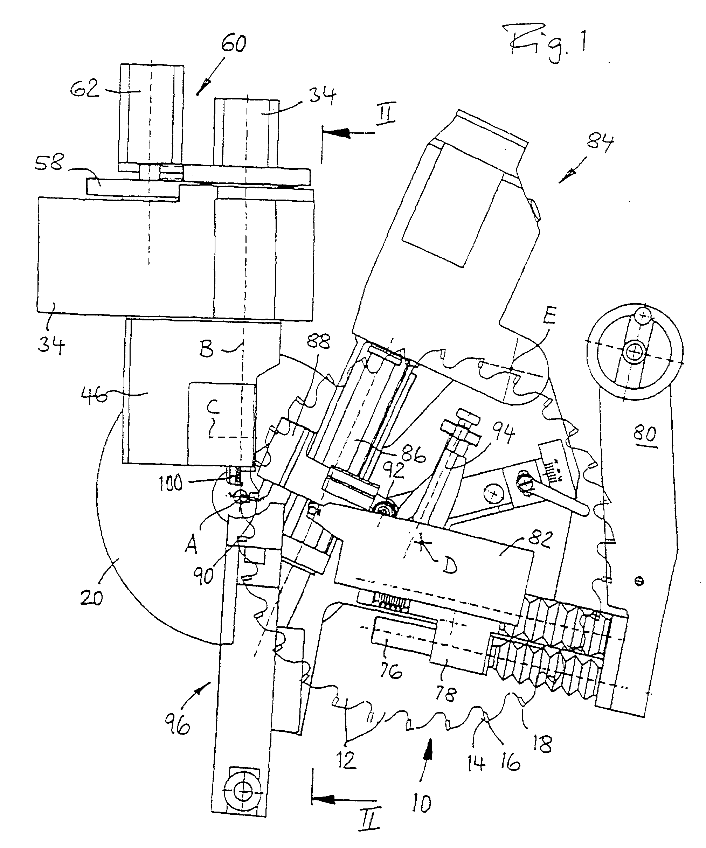

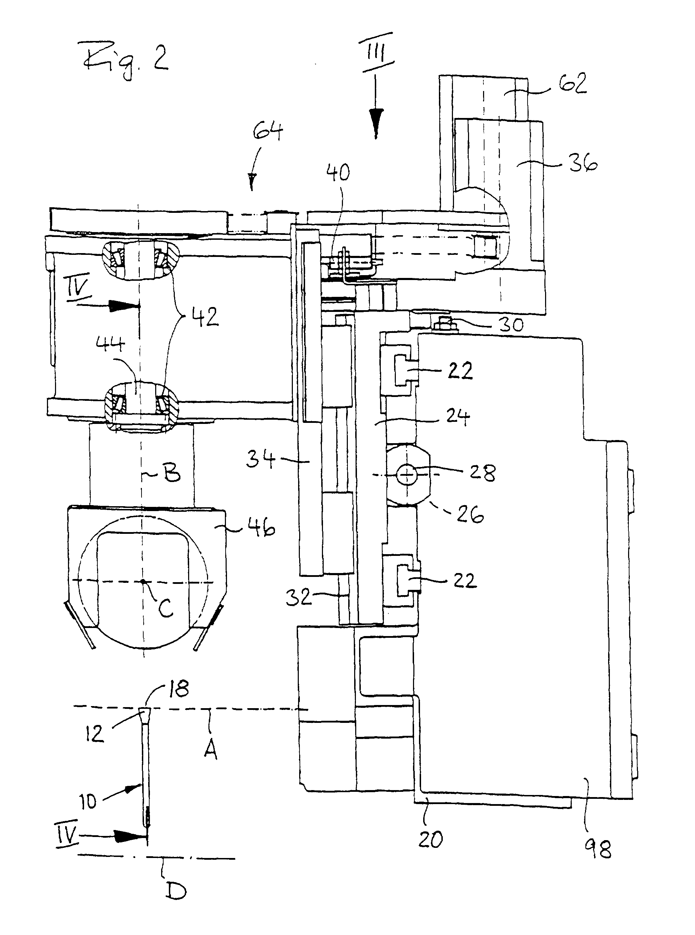

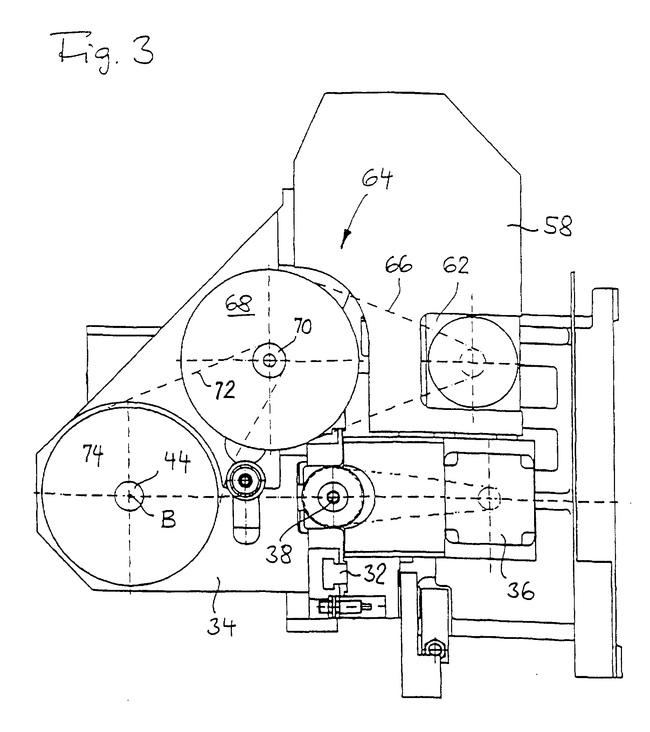

Zum Schleifen einer geraden Zahnbrust 14 oder eines geraden Zahnrückens 16 ist der Schwenkantrieb 60 programmgesteuert so eingestellt, daß der Werkzeugkopf 46 seine in Fig. 1 bis 5 abgebildete Normalstellung einnimmt, in der die Spindelachse C sich rechtwinklig zur Bezugsachse A erstreckt. Aus dieser Normalstellung läßt sich der Werkzeugkopf 46 mittels des Schwenkantriebs 60 programmgesteuert nach beiden Seiten in Schrägstellungen schwenken, um Schneidzähne 12 mit schräger Zahnbrust 14 oder schrägem Zahnrücken 16 zu schärfen oder um die Kanten zwischen Zahnrücken 16 und seitlichen Flanken eines Schneidzahns 12 abzufasen.

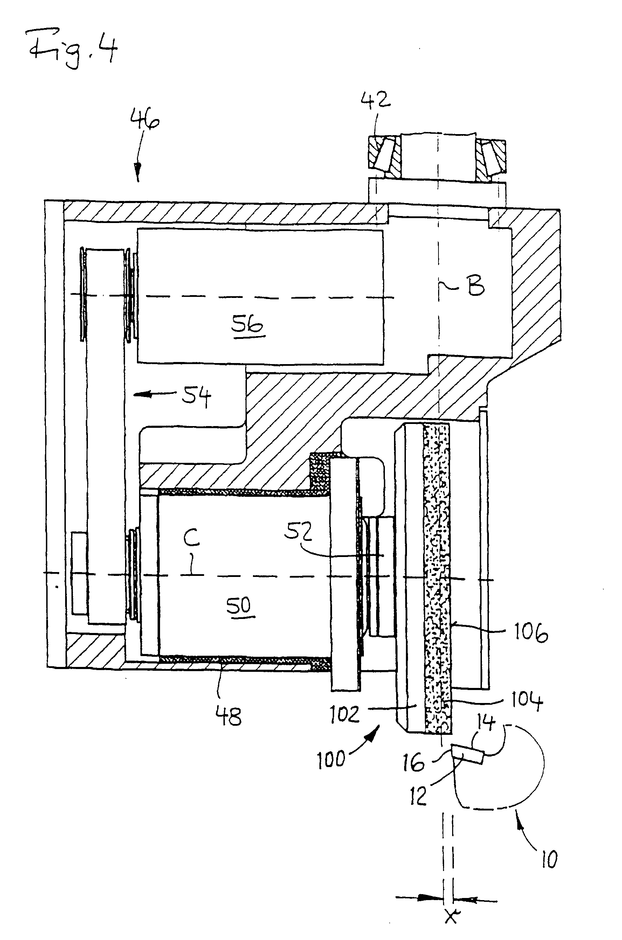

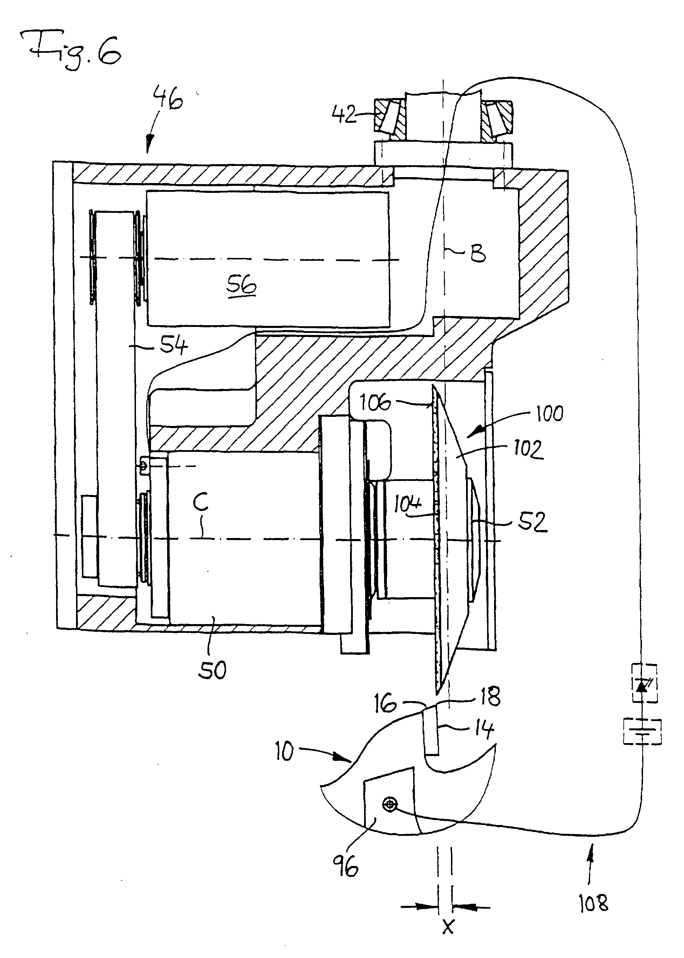

Am Maschinengestell 20 ist eine Werkstückschlittenführung 76 um die Bezugsachse A kippbar gelagert und in einer Stellung einstellbar, die dem Freiwinkel oder dem Spanwinkel der Schneidzähne 12 entspricht, je nachdem ob diese an ihrem Zahnrücken 16 bearbeitet werden sollen (Fig. 4) oder an ihrer Zahnbrust 14 (Fig. 6). An der Werkstückschlittenführung 76 ist ein Werkstückschlitten 78 geführt, der mit einer im dargestellten Beispiel manuell zu betätigenden Einstellvorrichtung 80 einstellbar ist und eine Werkstückhalterung 82 für ein Werkstück 10 enthält. Da das Werkstück 10 im dargestellen Beispiel ein Kreissägeblatt ist, gehört zur Werkstückhalterung 82 ein üblicher Zapfen, auf den das Werkstück 10 um seine Werkstückachse D drehbar aufgesteckt ist, um schrittweise derart vorgeschoben zu werden, daß nach jedem Schritt eine Bearbeitungsstellung erreicht wird, in der die Zahnspitze 18 eines der Schneidzähne 12 auf der Bezugsachse A steht.

Für die Vorschubbewegungen ist eine Vorschubeinrichtung 84 vorgesehen, die um eine zur Bezugsache A parallele Lagerachse E schwenkbar am Maschinengestell 20 gelagert ist und eine rechtwinklig zur Bezugsachse A angeordnete Vorschubführung 86 aufweist, an der ein Vorschubschlitten 88 hin- und herschiebbar geführt ist. Der Vorschubschlitten 88 trägt einen Vorschubfinger 90 zum Angreifen an jeweils einer Zahnbrust 14, um den betreffenden Schneidzahn 12 in seine Bearbeitungsstellung zu schieben. Der Vorschubschlitten 88 stützt sich mit einer an ihm gelagerten Kurvenfolgerolle 92 an einer Kurve eines Kurvenkörpers 94 ab, der schwenkeinstellbar am Maschinengestell 20 befestigt ist. Einzelheiten hierzu sind der DE-A 197 46 232 vom 20.10.1997 zu entnehmen.

Zum Festklemmen des Werkstücks 10 nach jeder Vorschubbewegung ist eine Klemmvorrichtung 96 üblicher Bauart vorgesehen.

Der Motor 26 und die Wegmeßeinrichtung 30 für den Zustellschlitten 24, der Motor 36 und die Wegmeßeinrichtung 40 für den Hubschlitten 34 sowie der Motor 62 und eine nicht dargestellte Winkelmeßeinrichtung für die Schwenkungen des Werkzeugkopfes 46 um die Schwenkachse B sind an eine numerische Steuerung 98 angeschlossen.

Als an der Werkzeugspindel 52 zu befestigendes Werkzeug 100 ist bei der dargestellten Maschine entweder eine topfförmige Schleifscheibe zum Schleifen der Schneidzähne 12 an ihrem Zahnrücken 16 vorgesehen (Fig. 1, 4 und 5) oder eine tellerförmige Schleifscheibe zum Schleifen der Schneidzähne 12 an ihrer Zahnbrust 14 (Fig. 6). In beiden Fällen gehört zum Werkzeug 100 ein Grundkörper 102 aus Stahl und ein daran befestigter Schleifbelag 104, dessen freie Stirnfläche die aktive Fläche 106 des Werkzeugs 100 bildet. Der Schleifbelag 104 enthält elektrisch leitfähiges Material. Das somit insgesamt elektrisch leitfähige Werkzeug 100 ist Bestandteil einer in Fig. 6 angedeuteten Meß-einrichtung 108 mit einem elektrischen Stromkreis, der sich über das Werkzeug 100 und den jeweils zu bearbeitenden Schneidzahn 12 schließt, wenn beide einander berühren.

Die Bearbeitungsstellung des Schneidzahns 12 ist bekannt, sei es infolge einer manuellen Einstellung des Werkstücks 10 mittels der Einstellvorrichtung 80 oder infolge einer programmgesteuerten Abtastung und Einstellung entsprechend DE 196 30 057 C1. Somit kann davon ausgegangen werden, daß die Zahnspitze 18 des zu bearbeitenden Schneidzahns 12 auf der Bezugsachse A steht. Um nun die sich durch Abnutzung verändernde Lage der aktiven Fläche 106 des Werkzeugs 100 zu ermitteln, bewirkt die numerische Steuerung 98, daß der Hubschlitten 34 mehrere Arbeitshübe ausführt, bei denen die aktive Fläche 106 des Werkzeugs 100 zunächst einen sicheren Abstand vom Zahnrücken 16 (Fig. 4) oder von der Zahnbrust 14 (Fig. 6) des Werkstücks 10 hat, und währenddessen wird der Zustellschlitten 24 langsam zugestellt, bis das Werkzeug 100 mit seiner aktiven Fläche 106 den Zahnrücken 16 bzw. die Zahnbrust 14 berührt und dadurch der Stromkreis der Meßeinrichtung 108 geschlossen wird. Die Stellung des Zustellschlittens 24, bei der dies geschieht, wird mittels der Wegmeßeinrichtung 30 festgestellt. Die Lage der Schwenkachse B in bezug auf einen beliebigen Nullpunkt der Wegmeßeinrichtung 30 ist von vornherein bekannt. Somit kann die numerische Steuerung 98 nun den Abstand x zwischen der Schwenkachse B und der aktiven Werkzeugfläche 106 in deren momentanem Abnutzungszustand errechnen.

Wenn nun eine gerade, d.h. zur Bezugsachse A parallele Zahnbrust 14 oder ein gerader Zahnrücken 16 bearbeitet werden soll, sind weitere Rechenoperationen nicht erforderlich, abgesehen davon, daß das Werkzeug 100 mittels des Zustellschlittens 24 in üblicher Weise um den Betrag zugestellt wird, der von der Zahnbrust 14 bzw. dem Zahnrücken 16 abgetragen werden soll.

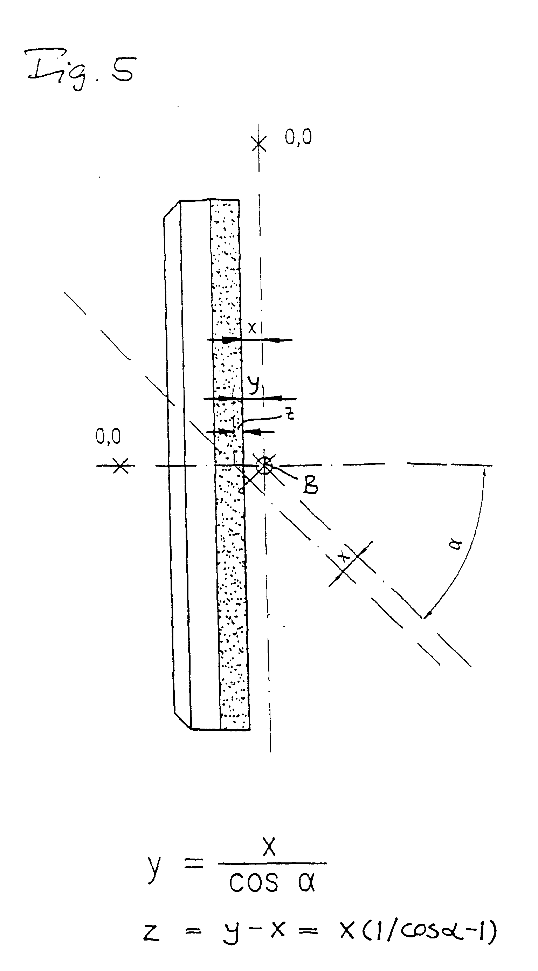

Wenn aber eine Zahnbrust 14 oder ein Zahnrücken 16 unter einem Winkel $\alpha$ schräg zur Werkstückachse D angeordnet ist, genügt es nicht, den Werkzeugkopf 18 um die Schwenkachse B entsprechend zu schwenken; hinzukommen muß eine dem gemessenen Abstand x und dem Schrägstellungswinkel $\alpha$ des Werkzeugkopfes angepaßte Zustellung z des Zustellschlittens 24. Diese Zustellung z wird von der numerischen Steuerung 98 entsprechend den in Fig. 5 dargestellten geometrischen Beziehungen nach der Formel

$$z = y - x = x \,(1/\cos \alpha - 1)$$

berechnet. Die Zustellung z hat einen negativen Betrag, wenn der Abstand x, wie in Fig. 4 und Fig. 6 dargestellt, positiv ist.

Mit zunehmender Abnutzung des Werkzeugs 100 nimmt der Betrag x allmählich ab. Bei dem in Fig. 6 dargestellten Werkzeug 100 bleibt der Abstand x jedoch bis zur vollständigen Abnutzung des Schleifbelages 104 positiv, da die Schwenkachse B sich durch den Grundkörper 102 erstreckt. Anders ist es bei dem in Fig. 4 und 5 dargestellten Werkzeug 100, bei dem sich die Schwenkachse B im neuen Zustand des Schleifbelages 104 zwischen dem Grundkörper 102 und der aktiven Fläche 106 erstreckt. Infolgedessen vermindert sich der Abstand x bei fortschreitender Abnutzung des Schleifbelages 104 gemäß Fig. 4 bis auf den Wert Null und nimmt bei weiterer Abnutzung einen negativen Wert an, der zum Bearbeiten schräger Zahnrücken 16 eine positive Zustellung erforderlich macht.

Eine negative Zustellung ist auch erforderlich, wenn ein Schneidzahn 12 nach dem Schleifen seines Zahnrückens 16 abgefast, d.h. am Übergang zwischen seinem Zahnrücken 16 und seinen seitlichen Flanken je einen Schrägschliff von begrenzter Breite erhalten soll.

**Patentansprüche**

1. Maschine zum Bearbeiten von Werkstücken (10) mit Schneidzähnen (12), insbes. von Sägeblättern, mit

   - einem Maschinengestell (20), das eine Bezugsachse (A) definiert,
   - einer Werkstückhalterung (82), an der sich ein Werkstück (10) so anordnen läßt, daß die Zahnspitze (18) eines zu bearbeitenden Schneidzahns (12) auf der Bezugsachse (A) liegt,
   - einem Werkzeugkopf (46), in dem eine mit einem scheibenförmigen Werkzeug (100) bestückbare Werkzeugspindel (52) um eine Spindelachse (C) drehantreibbar gelagert ist, und
   - einer den Werkzeugkopf (46) am Maschinengestell (20) beweglich abstützenden Anordnung mit
   - einem Hubschlitten (34), der längs einer Hubführung (32) quer zur Bezugsachse (A) hin- und herbewegbar ist,
   - einem Zustellschlitten (24), der längs einer Zustellführung (22) quer zur Hubführung (32) zustellbar ist, und
   - einer Schwenklagerung (42), die eine zur Hubführung (32) parallele Schwenkachse (B) definiert, um welche der Werkzeugkopf (46) in bezug auf den Hubschlitten (34) und dessen Führung (32) mittels eines Schwenkantriebs (60) aus einer Normalstellung zum Bearbeiten von zur Bezugsachse (A) parallelen Flächen der Schneidzähne (12) mittels einer aktiven Fläche (106) des Werkzeugs (100) in Schrägstellungen zum Bearbeiten schräger Flächen der Schneidzähne (12) mittels derselben aktiven Fläche (106) des Werkzeugs (100) schwenkbar ist, und ferner mit
   - einer numerischen Steuerung (98), von der mindestens der Zustellschlitten (24) steuerbar ist,

   **dadurch gekennzeichnet daß**

   - der Werkzeugkopf (46) mittels der Schwenklagerung (42) auch in bezug auf den Zustellschlitten (24) und dessen Führung (22) schwenkbar ist,
   - eine Meßeinrichtung (108) zum Messen einer Strecke (x) vorgesehen ist, um welche die aktive Fläche (106) des Werkzeugs (100) von der Schwenkachse (B) entfernt ist, und

- die numerische Steuerung (98) so programmierbar ist, daß sie

    -- in der Normalstellung des Werkzeugkopfes (46) den Zustellschlitten (24) eine Stellung einnehmen läßt, in der die Schwenkachse (B) einen mit der genannten Strecke (x) übereinstimmenden Abstand von der Bezugsachse (A) hat, und

    -- bei Schrägstellung des Werkzeugkopfes (46) den Zustellschlitten (24) in eine entsprechend korrigierte Stellung bringt.

2. Maschine nach Anspruch 1,
**dadurch gekennzeichnet, daß** die Meßeinrichtung (108) einen elektrischen Stromkreis aufweist, der über das Werkzeug (100) und das Werkstück (10) geschlossen wird, wenn beide einander berühren.

3. Maschine nach Anspruch 2,
**dadurch gekennzeichnet, daß** das Werkzeug (100) als Bestandteil der Meßeinrichtung (108) mit einer Meßdrehzahl antreibbar ist, die erheblich kleiner als seine Betriebsdrehzahl ist.

4. Maschine nach Anspruch 3,
**dadurch gekennzeichnet, daß** die Meßdrehzahl in der Größenordnung zwischen einem und 10 % der Betriebsdrehzahl liegt.

5. Maschine nach einem der Ansprüche 1 bis 4, bei der

- das Werkzeug (100) eine topfförmige Schleifscheibe ist, die einen scheibenförmigen Grundkörper (102) und einen Schleifbelag (104) aufweist, dessen Stirnfläche die aktive Fläche (106) des Werkzeugs (100) bildet, und
- die Schwenkachse (B) sich im Neuzustand des Schleifbelages (104) zwischen der aktiven Fläche (106) und dem Grundkörper (102) erstreckt.

6. Maschine nach einem der Ansprüche 1 bis 4, bei der

- das Werkzeug (100) eine tellerförmige Schleifscheibe ist, die einen Grundkörper (102) und einen Schleifbelag (104) aufweist, dessen Stirnfläche die aktive Fläche (106) des Werkzeugs (100) bildet, und
- die Schwenkachse (B) sich im Neuzustand des Schleifbelages (104) zwischen der aktiven Fläche (106) und dem Grundkörper (102) erstreckt.

**Claims**

1. A machine for machining workpieces (10) which have cutting teeth (12), especially saw blades, comprising

    - a machine bed (20) which defines a reference axis (A),
    - a workpiece support (82) on which a workpiece (10) can be arranged such that the tooth tip (18) of a cutting tooth (12) to be machined will lie on the reference axis (A),
    - a tool head (46) in which a tool spindle (52) adapted to be equipped with a disc-shaped tool (100) is supported so as to be driven in rotation about a spindle axis (C), and
    - an assembly for movably supporting the tool head (46) on the machine bed (20) which assembly comprises
    - a reciprocating slide (34) movable back and forth along a reciprocating slide guide means (32) transversely of the reference axis (A),
    - a feed slide (24) adapted to be advanced along a feed slide guide means (22) transversely of the reciprocating slide guide means (32), and
    - a pivot bearing means (42) defining a pivot axis (B) parallel to the reciprocating slide guide means (32) about which axis the tool head (46) is pivotable by a pivot drive means (60), with respect to the reciprocating slide (34) and the guide means (32) thereof, from a normal position at which surfaces of the cutting teeth (12) extending parallel to the reference axis (A) are to be machined by means of an active face (106) of the tool (100), into inclined positions at which oblique surfaces of the cutting teeth (12) are to be machined by means of the same active face (106) of the tool (100), and further comprising
    - a numerical control means (98) by which at least the feed slide (24) is controllable,

    **characterized in that**,

    - the tool head (46) is pivotable by the pivot bearing (42) also with respect to the feed slide (24) and the guide means (22) thereof,
    - a measuring means (108) is provided to measure a distance (x) by which the active face (106) of the tool (100) is spaced from the pivot axis (B), and
    - the numerical control means (98) is programmable such that

        -- it causes the feed slide (24) to adopt a position at which the spacing of the pivot axis (B) from the reference axis (A) equals the distance (x) when the tool head (46) is in the normal position, and

-- it moves the feed slide (24) into a respective corrected position when the tool head (46) is positioned at an inclination.

2. The machine as claimed in claim 1, **characterized in that** the measuring means (108) comprises an electric circuit which is closed through the tool (100) and the workpiece (10) when the two touch each other.

3. The machine as claimed in claim 2, **characterized in that** the tool (100), being part of the measuring means (108), is adapted to be driven at a rotational measuring speed which is considerably slower than the rotational operating speed.

4. The machine as claimed in claim 3, **characterized in that** the rotational measuring speed lies in the order of magnitude between one and 10 % of the rotational operation speed.

5. The machine as claimed in one of claims 1 to 4, wherein

- the tool (100) is a cup-shaped grinding disc which comprises a disc-shaped base (102) and a grinding layer (104) of which the front end surface presents the active face (106) of the tool (100), and
- the pivot axis (B) extends between the active face (106) and the base (102) when the grinding layer (104) is new.

6. The machine as claimed in one of claims 1 to 4, wherein

- the tool (100) is a plate-shaped grinding disc which comprises a base (102) and a grinding layer (104) of which the front end surface presents the active face (106) of the tool (100), and
- the pivot axis (B) extends between the active face (106) and the base (102) when the grinding layer (104) is new.

**Revendications**

1. Machine pour l'usinage de pièces (10) munies de dents coupantes (12), en particulier de lames de scie, comportant

- un châssis de machine (20) qui définit un axe de référence (A),
- un porte-pièce (82), sur lequel une pièce à usiner (10) peut être ainsi agencée que la pointe (18) d'une dent coupante (12) à usiner se trouve sur l'axe de référence (A),

- une tête à outil (46) dans laquelle une broche porte-outil (52) susceptible d'être équipée d'un outil (100) en forme de disque est montée avec entraînement rotatif autour d'un axe de broche (C), et
- un agencement soutenant de manière mobile la tête à outil (46) sur le châssis de machine (20), comportant
- un chariot de levage (34) mobile en va-et-vient le long d'un guidage de levage (32) perpendiculairement à l'axe de référence (A),
- un chariot d'approche (24) qui peut être avancé le long d'un guidage d'approche (22) perpendiculairement au guidage de levage (32), et
- un palier de pivotement (42) qui définit un axe de pivotement (B) parallèle au guidage de levage (32), autour duquel la tête à outil (46) peut pivoter par rapport au chariot de levage (34) et à son guidage (32) au moyen d'un entraînement de pivotement (60) depuis une position normale, destinée à usiner des surfaces des dents coupantes (12) parallèles à l'axe de référence (A) au moyen d'une surface active (106) de l'outil (100), jusque dans des positions inclinées destinées à usiner des surfaces inclinées des dents coupantes (12) au moyen de la même surface active (106) de l'outil (100), et comportant en outre
- une commande numérique (98) au moyen de laquelle au moins le chariot d'approche (24) peut être commandé,

**caractérisée en ce que**

- la tête à outil (46) peut pivoter au moyen du palier de pivotement (42) également par rapport au chariot d'approche (24) et à son guidage (22),
- un dispositif de mesure (108) est prévu pour mesurer un trajet (x) duquel la surface active (106) de l'outil (100) est éloignée de l'axe de pivotement (B), et
- la commande numérique (98) est ainsi programmable que

-- dans la position normale de la tête à outil (46), elle permet au chariot d'approche (24) d'occuper une position dans laquelle l'axe de pivotement (B) présente une distance de l'axe de référence (A) qui coïncide avec le trajet mentionné (x), et
-- dans la position inclinée de la tête à outil (46), elle amène le chariot d'approche (24) dans une position corrigée en correspondance.

2. Machine selon la revendication 1, **caractérisée en**

**ce que** le dispositif de mesure (108) comprend un circuit électrique qui est fermé via l'outil (100) et via la pièce à usiner (10), lorsque les deux viennent en contact mutuel.

3. Machine selon la revendication 2, **caractérisé en ce que** l'outil (100), faisant partie du dispositif de mesure (108), peut être entraîné à une vitesse de rotation de mesurage qui est nettement inférieure à sa vitesse de rotation de fonctionnement.

4. Machine selon la revendication 3, **caractérisée en ce que** la vitesse de rotation de mesurage est de l'ordre de 1 à 10 % de la vitesse de rotation de fonctionnement.

5. Machine selon l'une quelconque des revendications 1 à 4, dans laquelle

   - l'outil (100) est une meule en forme de coupelle qui comprend un corps de base (102) en forme de disque et une garniture de meulage (104) dont la surface frontale forme la surface active (106) de l'outil (100), et
   - dans l'état neuf de la garniture de meulage (104), l'axe de pivotement (B) s'étend entre la surface active (106) et le corps de base (102).

6. Machine selon l'une quelconque des revendications 1 à 4, dans laquelle

   - l'outil (100) est une meule en forme de plateau qui comprend un corps de base (102) et une garniture de meulage (104) dont la surface frontale forme la surface active (106) de l'outil (100), et
   - dans l'état neuf de la garniture de meulage (104), l'axe de pivotement (B) s'étend entre la surface active (106) et le corps de base (102).

Fig. 1

Fig. 2

Fig. 3

Fig.4

$$Fig. 5$$

$$y = \frac{x}{\cos\,\alpha}$$

$$z = y - x = x(1/\cos\alpha - 1)$$

Fig.6